# EUROPÄISCHE PATENTSCHRIFT

(11) **EP 0 966 141 B1**
(45) Veröffentlichungstag und Bekanntmachung des Hinweises auf die Patenterteilung: **06.08.2008**
(21) Anmeldenummer: 99111693.0
(22) Anmeldetag: 15.06.1999
(51) Int. Cl.: H04M 3/42, H04Q 3/00, H04M 15/00, H04Q 3/47, H04Q 3/66

(54) **System und Verfahren zur Fernaktualisierung einer Rufnummerntranformationsfestlegung**
System and method for remote updating of a call number transforming designation
Système et méthode pour actualiser à distance une désignation de transformation du numéro d'appel

(30) Priorität: 15.06.1998 DE 19826581
(43) Veröffentlichungstag der Anmeldung: 22.12.1999
(73) Patentinhaber: Siemens Enterprise Communications GmbH & Co. KG, 81379 München (DE)
(72) Erfinder: Schulz, Egon, Dr., 80993 München (DE); Scotto di Carlo, Vincenzo, 81739 München (DE)

(56) Entgegenhaltungen:
- EP-A- 0 676 888
- WO-A-92/11725
- WO-A-97/05749
- AU-A- 3 428 995

## Beschreibung

Seit Beginn der Liberalisierung auf dem Markt für Anbieter von Kommunikationsdiensten, besteht für den einzelnen Kommunikationsteilnehmer die Möglichkeit, sich den jeweiligen Netzbetreiber frei auszuwählen. Zugang zu den verschieden Kommunikationsnetzen verschafft er sich durch Wahlverfahren, indem er die für das jeweilige Kommunikationsnetz gültige Vorwahlnummer wählt. Bedingt durch die Vielzahl der vorhandenen Anbieter, sowie der unterschiedlichen tageszeitabhängigen Gebühren, ist es für den einzelnen Kunden jedoch nahezu aussichtslos sich einen Überblick über die komplette Angebotssituation am Markt zu verschaffen und daraus das günstigste Angebot für seine Bedürfnisse zum jeweiligen Zeitpunkt auszuwählen. Ausgelöst durch diese unüberschaubare Situation haben sich am Markt Anbieter etabliert, welche diese Analyse der Marktsituation für die Kommunikationsteilnehmer übernehmen und diesen gegen eine Gebühr ein Gerät zur Verfügung stellen, welches automatisch eine vom Teilnehmer gewählte Nummer in eine andere Nummer umsetzt, welche Kriterien entspricht, die der Teilnehmer in einem Anforderungsprofil dem Diensteanbieter zur Verfügung gestellt hat. Da sich die Angebote der Netzbetreiber hinsichtlich der Kundenanforderungen ständig ändern, muß der Diensteanbieter turnusmäßig eine Aktualisierung der Daten im Endgerät beim Kunden durchführen. Auf diese Weise wird gewährleistet, daß der Kommunikationsteilnehmer jederzeit durch Eingabe immer der selben Nummer eine seinen Kommunikationsbedürfnissen entsprechende Kommunikationsverbindung über unterschiedliche Kommunikationsnetze erhält. Ein Anbieter solcher Nummerntransformationsgeräte, der sich bereits am Markt etabliert hat, ist die Firma Telejet. Das von ihr angebotene Verfahren und Gerät, welches wegen des häufig von den Kunden gewählten Kostenkriteriums für den Verbindungsaufbau auch Least Cost Routing Box genannt wird, bedie technischen Details im Internet unter der Adresse "http://www.ico.de/tjtm.htm".

Die Nachteile des dort beschriebenen Verfahrens bestehen darin, daß der Kunde entweder die Datenübernahme durch das Transformationsgerät selbständig einleiten muß, bzw. daß diese über eine Zeitsteuerung durchgeführt wird, welche relativ lange Aktualisierungsintervalle vorsieht. Ein weiteres Problem besteht darin, daß für die Zeitdauer der Datenübertragung zum Transformationsgerät die Leitung des Kunden belegt ist und das, weil die Initialisierung des Transfervorganges von dem Transformationsgerät ausgeht, für den Kunden Kosten entstehen.

Aus der WO 97/05749 ist ein Call Management System bekannt, welches für Anrufe seitens eines Nutzers den optimalen Betreiber des gewünschten Telekommunikationsdienstes wählt und bevorzugt aus einem lokalen Computer, einem Datenserver und einem oder mehreren Netzabschlusseinrichtungen gebildet ist. Für eine Auswahl erforderliche Tarifdaten werden dabei periodisch an eine Datenbasis des lokalen Computers übermittelt.

Aus der AU 34289 95 A ist ein System zum automatischen Routing von Telefonanrufen über den kostengünstigsten Betreiber von Telekommunikationsnetzen wählt. Dabei werden die notwendigen Tarifdaten ebenfalls in einer sich beim Nutzer befindenden lokalen Datenbasis. Ein Update der Tarifinformationen kann dabei jederzeit bei einer Änderung der Tarife erfolgen.

Die der Erfindung zugrunde liegende Aufgabe besteht darin, ein weiteres System und Verfahren anzugeben, mit dem die Rufnummerntransformationsfestlegung eines Kommunikationsteilnehmers aktualisiert werden kann, wobei dieses Verfahren nicht die Nachteile bekannter Verfahren aufweist.

Diese Aufgabe wird für das Verfahren gemäß den Merkmalen des Patentanspruches 1 und für das System gemäß den Merkmalen des Patentanspruches 4 gelöst. Weiterbildungen der Erfindung ergeben sich aus den abhängigen Ansprüchen.

Vorteilhaft entstehen bei dem beschriebenen Verfahren keine Kosten für den Kunden, weil der Aktualisierungsvorgang durch die Aktualisierungsstelle initialisiert wird. Weiterhin wird der Nachteil der Leitungsbelegung eliminiert, weil die Aktualisierung auf Basis statistischer Analysen durch die Aktualisierungsstelle zu einem Zeitpunkt erfolgen kann, an dem statistisch wenig keine Kommunikation auf der Leitung stattfindet.

Vorteilhaft wird bei dem beschriebenen Verfahren die Festlegung zeitgesteuert verändert, wobei der Aktualisierungszeitpunkt von mal zu mal zwischen den beiden Kommunikationspartnern, also der Aktualsierungsstelle und dem Kommunikationspartnern, also der Aktualsierungsstelle und dem Transformationsgerät vereinbart werden kann. Auf diese Weise wird sichergestellt, daß der Kunde durch den Aktualisierungsvorgang möglichst wenig belästigt wird.

Besonders vorteilhaft wird bei dem beschriebenen Verfahren das Wahlverhalten des Kommunikationsteilnehmers durch die Aktualisierungsstelle, bzw. die Transformationseinheit statistisch analysiert, um über das Verkehrsaufkommen auf der Kundenleitung informiert zu sein. Weiterhin erfolgt die Aktualisierung der Festlegung bevorzugt in Abhängigkeit der Veränderung eines Kriteriums, das der Kunde in Form eines Anforderungsprofils an die Aktualisierungsstelle weitergegeben hat. Vorteilhaft direkt zu einem Zeitpunkt, an dem sich bezüglich eines Kriteriums hinsichtlich der Netzbetreiber eine andere Situation ergibt.

Vorteilhaft wird bei einer weiteren Weiterbildung des beschriebenen Verfahrens die Aktivität, von an einem Transformationsgerät angeschlossenen Endgeräten unterdrückt, indem die Anschlußleitung, welche zur Transformationseinrichtung führt kurz vor dem verabredeten Aktualisierungszeitpunkt stumm geschaltet wird, so daß der Kunde nicht durch Klingeln und andere Geräteaktivitäten beim Aktualisierungsvorgang belästigt wird.

Besonders vorteilhaft ist ein System, welches ein Kommunikationsendgerät aufweist, das Mittel zur veränderbaren Festlegung von mindestens zwei Rufnummern enthält und das mit einer Aktualisierungsstelle in Verbindung steht, die diese Rufnummern fernaktualisieren kann, wobei die Festlegung der Rufnummerntransformation durch die Aktualisierungsstelle veranlaßt wird. Auf diese Weise wird eine Minimalkonfiguration zur Verfügung gestellt, welche mit geringem technischen Aufwand die Aufgabe der Erfindung löst.

Besonders vorteilhaft sind bei dem beschriebenen System durch die unterschiedlichen Rufnummern verschiedene Kommunikationsnetze oder -Diensteanbieter erreichbar und die Veränderung der Rufnummernfestlegung erfolgt in Abhängigkeit der Veränderung eines variablen Parameters dieser Netze oder Anbieter. Auf diese Weise wird sichergestellt, daß der Kommunikationsteilnehmer immer die aktuellsten Daten für seine Rufnummerntransformation zur Verfügung hat.

Besonders vorteilhaft wird bei dem beschriebenen System die Aktualisierung lediglich in Abhängigkeit eines vom Kunden spezifizierten Kriteriums durchgeführt, so daß der Verkehr, der durch die Aktualisierung auf der Teilnehmerleitung entsteht, minimiert werden kann.

Besonders vorteilhaft sind bei dem beschriebenen System Mittel zur Zeitsteuerung vorhanden, wobei der Aktualisierungs Zeitpunkt von mal 20 mal zwischen der Aktualisierungstelle und der Transformations einrichtung vereinbart werden kann, da sich auf diese Weise die Aktualisierungsstelle und die Transformationseinrichtung für den Datenaustausch mit einander synchronisieren können.

Vorteilhaft sind bei einer Weiterbildung des beschriebenen Verfahrens Mittel vorgesehen, die Aktivitäten von an einem Transformationsgerät angeschlossenen Endgeräten des Kunden unterdrücken, damit der Kunde nicht durch diese Aktivitäten beim Aktualisierungsvorgang belästigt wird.

Im folgenden werden Beispiele der Erfindung anhand von Figuren weiter erläutert.

Figur 1 zeigt eine Topologie von unterschiedlichen Kommunikationsnetzen.
Figur 2 zeigt eine Topologie eines Systems aus Aktualisierungsstelle und Transformationsgerät
Figur 3 zeigt ein Beispiel eines Zeit-/ Aktionsplanes, bei einer drahtgebundenen Aktualisierung.
Figur 4 zeigt ein Beispiel einer Topologie für ein drahtloses System.

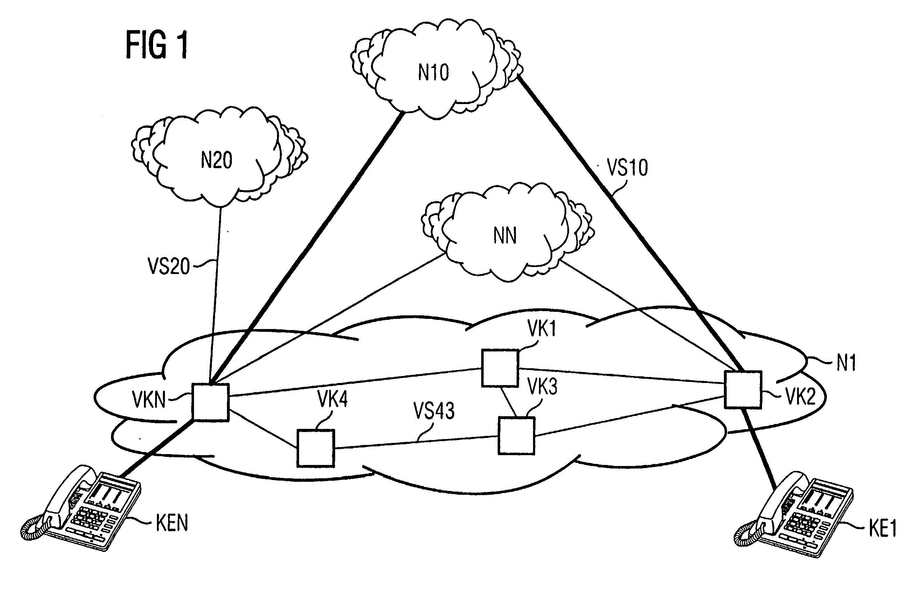

Wie Figur 1 zeigt, kann eine Netztopologie aus Kommunikationsendgeräten KE1 und KEN bestehen, sowie unterschiedlichen Kommunikationsnetzen N1, N10, N20 und NN. Für das Kommunikationsnetz N1 sind beispielsweise Vermittlungsknoten VK1 bis VKN dargestellt, die untereinander durch Verbindungsstrecken VS verbunden sind. Die Kommunikationsendgeräte sind hier zwar als Telefone dargestellt, können aber ohne Beeinträchtigung der Erfindung jegliche Art von Kommunikationsendgeräten sein. Wie anhand der Darstellung leicht erkannt werden kann, bestehen von dem Kommunikationsendgerät K1 aus unterschiedlichste Möglichkeiten über die verschiedenen Kommunikationsnetze zum Kommunikationsendgerät KEN zu gelangen. Bei gängigen Verfahren wird die Kommunikationsverbindung und das entsprechende Netz durch Eingabe einer netzspezifischen Telefonnummer ausgewählt. Auswahlkriterien für die Wahl eines bestimmten Netzes können beispielsweise Kostengründe, oder auch technische Gründe, wie Verfügbarkeit von Kommunikationsverbindungen zu bestimmten Zeiten, Angebote von unterschiedlichen Kommunikationsdiensten, wie beispielsweise Video on Demand oder Internet-Zugang, bzw. von den jeweiligen Kommunikationsnetzen zur Verfügung gestellte unterschiedliche Datenübertragungsraten sein. Auch andere, hier nicht aufgezählte Kriterien, können für Kunden eine Rolle spielen.

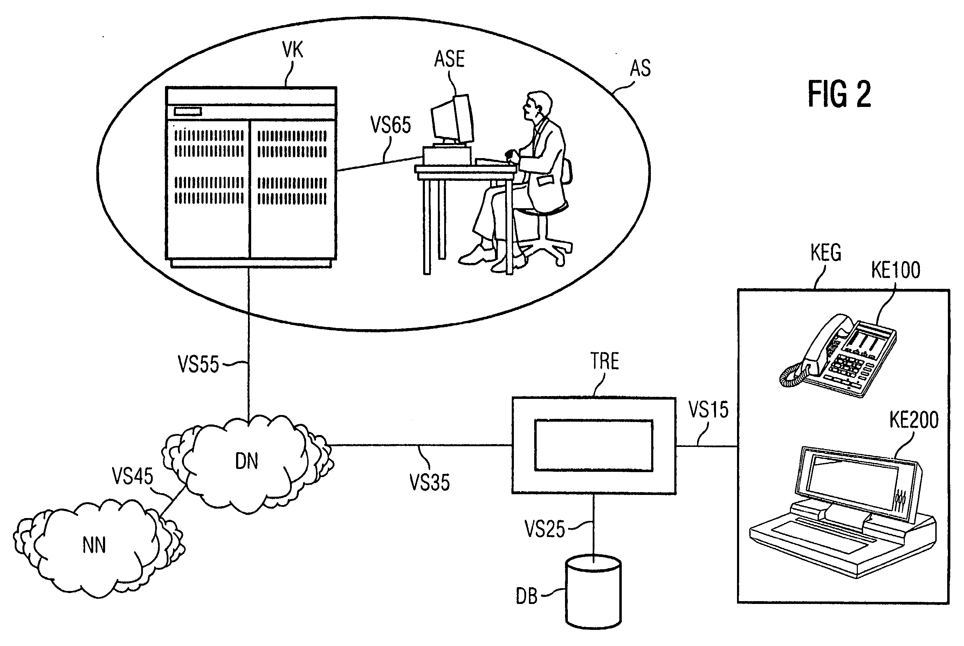

Wie Figur 2 zeigt, besteht ein Beispiel eines Systems aus einer Aktualisierungsstelle AS, welche beispielsweise an einen Vermittlungsknoten VK über eine Verbindungsstrecke VS65 angeschlossen ist und welche eine Auswerteeinrichtung ASE zur Auswertung kommunikationsnetzspezifischer Daten unterschiedlicher Kommunikationsnetze aufweist. Beispielsweise ist diese Aktualisierungsstelle mit einer Verbindungsstrecke VS55 an ein digitales Netzwerk angebunden, welches wiederum über eine Verbindungsstrecke VS35 an die Transformationseinheit TRE angeschlossen ist, welche eine Datenbasis DB aufweist, mit der sie über eine Verbindungsstrecke VS25 kommunizieren kann. An die Transformationseinheit schließt sich, angeschlossen über eine Verbidnungsstrecke VS15 eine Kommunikationsendgerätegruppe an, in welche hier beispielsweise ein Kommunikationsgerät KE100 und KE200 vorhanden sind. Es kann jedoch eine Vielzahl von Geräten, die beim Kunden vorhanden sind, angeschlossen werden, und es ist auch nicht erforderlich, daß das Transformationsgerät separat mit eigenem Gehäuse ausgeführt ist. Vielmehr kann das Transformationsgerät auch in ein Kommunikationsendgerät beim Kunden integriert sein. Für diesen Fall sind dann Vorkehrungen zu treffen, daß die Abläufe beim Aktualisierungsvorgang der Festlegung der Transformationsnummern eingehalten werden können. Dies gilt insbesondere für die unerwünschten Aktivitäten von Geräten, welche den Kunden belästigen könnten. Über die Kommunikationsendgeräte KE ist es dem Kommunikationsteilnehmer, der über diese Geräte verfügt möglich, beliebige Netze zu erreichen, die beispielsweise mit dem digitalen Netzwerk DN über eine Verbindungsstrecke VS45 verbunden sind. In der Datenbank DB sind beispielsweise die Nummerntransformationsfestlegungen vorhanden, die für den entsprechenden Kunden und seine Endgerätegruppe KEG von der Anforderungsstelle AS gemäß einem vom Kunden vorgegebenen Anforderungsprofil maßgeblich sind. Sie werden beispielsweise hinsichtlich der Kriterien des Anforderungsprofiles ausgewählt, die Parameter unterschiedlicher Kommunikationsnetze betreffen. Mittels der Auswerteeinrichtung ASE besteht für die Aktualisierungsstelle die Möglichkeit die Vielzahl der Kommunikationsnetze N hinsichtlich beliebig vieler kommunikationsrelevanter Kriterien auszuwerten und diese kommunikationsrelevanten Kriterien auf das Anforderungsprofil des Kunden abzubilden, um daraus spezifische, für den jeweiligen Kunden gültige Nummerntransformationen abzuleiten und diese festzulegen. Der Vorgang der Auswertung kann je nach technischer Ausstattung der Aktualisierungsstelle manuell oder durch elektronische Einrichtungen erfolgen, die beispielsweise in einem Vermittlungsknoten VK vorgesehen sein können. Es besteht beispielsweise auch die Möglichkeit, daß in der Transformationseinrichtung das Wahlverhalten, das sich aus der Wahl von Nummern der verschiedenen Kommunikationsendgeräte in der Kommunikationsendgerätegruppe KEG ergibt, abgespeichert wird. Die gespeicherten Daten lassen sich über die dargestellten Verbindungsstrecken durch die Aktualisierungsstelle AS abrufen und es kann eine statistische Analyse des Wahlverhaltens eines jeweiligen Kunden durchgeführt werden, um beispielsweise das Verkehrsaufkommen auf der Verbindungsstrecke VS35 zu ermitteln. Die im Transformationsgerät festgelegte Nummerntransformation kann von der Aktualisierungsstelle jederzeit über die dargestellten Verbindungen beeinflußt werden. Bevorzugt werden bei einem Aktualisierungsvorgang, der durch die Aktualisierungsstelle veranlaßt wird, die Kommunikationsendgeräte in der Kommunikationsendgerätegruppe KEG deaktiviert, indem die Verbindungsstrecke VS15 abgekoppelt wird. Auf diese Weise wird verhindert, daß Telefone klingeln, Anrufbeantworter anlaufen, Faxe Papier abspulen, oder ein PC in Erwartung von elektronischer Post hochfährt.

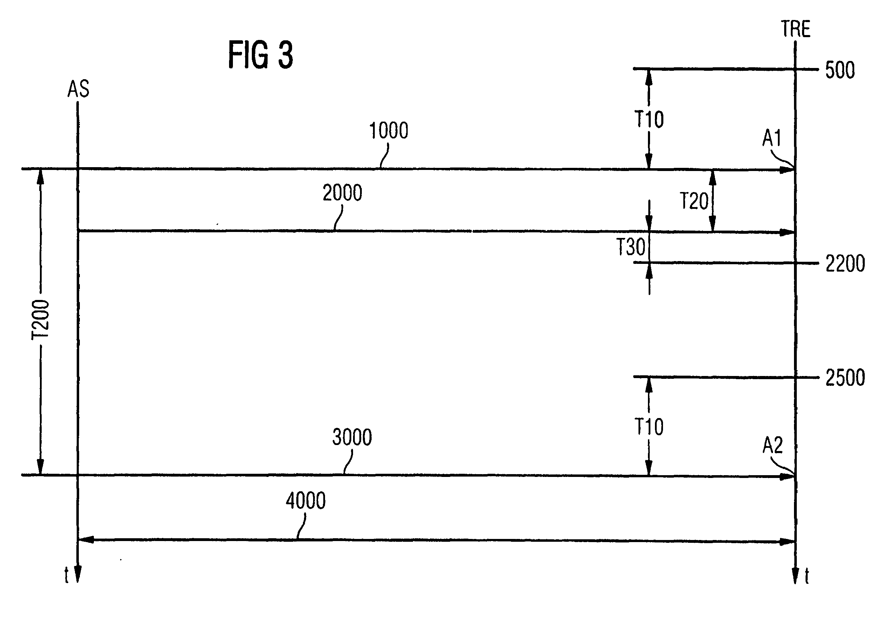

Figur 3 zeigt ein Beispiel eines Zeit- / Aktionsplanes für die Aktualisierung eines Transformationseinrichtung TRE durch die Aktualisierungsstelle. Links ist die Aktualisierungsstelle AS dargestellt und rechts das Transformationsgerät TRE, bzw. die dort vorhandene Datenbasis und nach unten ist die Zeitachse t angegeben. Für diesen Fall ist es wichtig, daß die Aktualisierungsstelle und die Transformationseinheit über genau gehende Uhren verfügen, die regelmäßig gestellt, oder von einer Funkuhr gesteuert werden. Bei einem letzten Aktualisierungsvorgang wurde beispielsweise von der Aktualisierungsstelle der Zeitpunkt A1 als günstiger Zeitpunkt zur Datenübertragung ermittelt und zwischen der Aktualisierungsstelle und der Transformationseinrichtung als Datenübertragunszeitpunkt vereinbart. Anhand der internen Uhr, wird in der Transformationseinheit erkannt, daß der Zeitpunkt A1 naht und zu einem Zeitpunkt 500, der einen Zeitabschnitt T10 vor A1 liegt, werden beispielsweise die beim Teilnehmer vorhandenen Endgeräte abgekoppelt, damit diese bei der Übertragung keine unerwünschten Aktivitäten entwickeln. Von dem Transformationsgerät wird dann weiterhin überwacht, ob nach einem Zeitabschnitt T20, nach A1, nachdem ein Anruf 1000 von der Aktualisierungsstelle ankam, die Leitung wieder freigegeben wird. Dieser Vorgang ist mit 2000 bezeichnet. Falls der Zeitabschnitt T20 nicht eingehalten wird, so stammt der Anruf 1000 nicht von der Aktualisierungsstelle und die Teilnehmerendgeräte werden nach einem Zeitabschnitt T30 zu einem Zeitpunkt 2200 wieder freigegeben. In Abhängigkeit des Anrufzeitpunktes A1 erwartet die Transformationseinheit nun nach einem Zeitabschnitt T200 einen weiteren Anruf zu einem Zeitpunkt A2. Analog zur vorher beschriebenen Vorgehensweise werden zu einem Zeitabschnitt T10 vor dem erwarteten Anrufzeitpunkt durch die Aktualisierungsstelle, die Teilnehmerendgeräte an einem Zeitpunkt 2500 abgekoppelt und mit 3000 trifft der Anruf der Aktualisierungsstelle zur Übertragung der neuen Transformationsdaten für die Festlegung der Aktuell oder Künftig gültigen Nummern ein. Durch dieses Übertragungsprotokoll wird sichergestellt, daß Aktualisierungsstelle AS und Transformationsgerät TRE über die Teilnehmeranschlußleitung kommunizieren können, und daß der Teilnehmer durch den Aktualisierungsvorgang nicht belästigt wird. Ebenfalls wird sichergestellt, daß für den Teilnehmer keinerlei Kosten anfallen. Mit 4000 wird der Vorgang der Datenübertragung bezeichnet, wobei durch die Pfeilrichtung dargestellt ist, daß die Daten sowohl von der Aktualisierungsstelle zum Transformationsgerät, als auch vom der Transformationsgerät zur Aktualisierungsstelle erfolgen kann. Auf diese Weise sind beispielsweise durch die Aktualisierungsstelle statistische Daten des Wahlverhaltens, welche in der Transformationseinheit gespeichert werden, abrufbar und in Folge statistisch auswertbar.

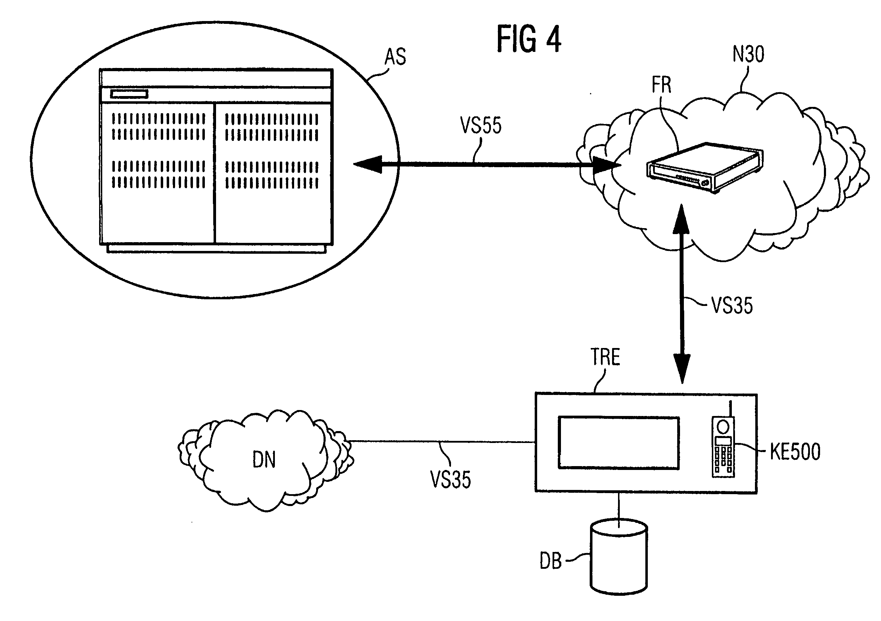

Wie Figur 4 zeigt, kann die Aktualisierungsstelle mit dem Transformationsgerät auch über eine Funkstrecke, dargestellt durch VS55 N30 und VS35, sowie einen Funkrepeater FR verbunden sein. Hierbei tritt das Problem, der Belegung der Teilnehmeranschlußleitung während des Aktualisierungsvorganges nicht auf, da dieser parallel zur Kommunikation auf der Verbindungsstrecke VS35 mit den digitalen Netzwerk DN durch das Kommunikationsendgerät KE500 erfolgen kann. Mit dieser Darstellung soll auch gezeigt werden, daß das beschriebene System sowohl für drahtgebundene Netze, als auch für drahtlose Netze funktioniert. Es ist also ebenfalls der Anwendungsfall denkbar, daß durch die Aktualisierungsstelle AS Nummerntransformationen für den drahtlosen Netzzugang zu verschiedenen Funknetzen festgelegt wird.

## Patentansprüche

1. Verfahren zur Fernaktualisierung einer Rufnummerntranformationsfestlegung in einer Transformationseinrichtung zur Transformation mindestens einer seitens eines Kommunikationsteilnehmers gewählten Rufnummer in eine durch die Festlegung definierte Rufnummer durch eine Aktualisierungsstelle (AS) mit folgenden Merkmalen:
a) die Transformationseinrichtung (TRE) wird zuerst durch die Aktualisierungsstelle (AS) kontaktiert;
b) die Festlegung wird aktuell verändert;
c) die Festlegung wird zeitgesteuert verändert, wobei der Aktualisierungszeitpunkt von mal zu mal zwischen der Aktualisierungsstelle (AS) und der Transformationseinrichtung (TS) vereinbart werden kann;
d) durch die Festlegung wird der Zugang zu verschiedenen Kommunikationsnetzen (N1,N10,N20,NN) gesteuert, wobei
d1) das Wahlverhalten des Kommunikationsteilnehmers seitens der Aktualisierungsstelle (AS) statistisch analysiert wird;
d2) die Festlegung in Abhängigkeit mindestens eines kommunikationsnetzspezifischen Kriteriums erfolgt, das der Aktualisierungsstelle (AS) vom Kommunikationsteilnehmer vorgegeben wird;
d3) die Aktualisierungsstelle (AS) die Kommunikationsnetze (N1,N10,N20,NN) hinsichtlich des vorgegebenen Kriteriums überwacht und in Abhängigkeit einer Änderung dieses Kriteriums eine Fernaktualisierung durchführt.

2. Verfahren nach einem der vorangehenden Ansprüche, bei dem ein beim Kommunikationsteilnehmer vorhandenes Endgerät deaktiviert wird.

3. Verfahren nach Anspruch 1 oder 2, bei dem die Transformationseinrichtung (TRE) und die Aktualisierungsstelle (AS) über das gleiche Kommunikationsmedium verbunden sind und für den Fall, daß zu einem verabredeten Aktualisierungszeitpunkt der Anschluß des Kommunikationsteilnehmers belegt ist, nach einer vordefinierten Zeitspanne, die sowohl der Aktualisierungsstelle (AS) als auch dem Transformationseinrichtung (TRE) bekannt ist, ein weiterer Aktualisierungsversuch gestartet wird.

4. System zur Fernaktualisierung einer Rufnummerntransformationsfestlegung zur Transformation mindestens seitens eines Kommunikationsteilnehmers gewählten Rufnummer in eine durch die Festlegung definierte Rufnummer,
a) das mindestens eine Transformationseinrichtung (TRE) aufweist mit Mitteln zur veränderbaren Festlegung von mindestens zwei Rufnummerntransformationen,
b) das eine Aktualisierungsstelle (AS) aufweist mit Mitteln zur Fernaktualisierung von mindestens einer Festlegung von mindestens einer Transformationseinrichtung (TRE),
c) bei dem die Fernaktualisierung durch die Aktualisierungsstelle (AS) in der Form durchgeführt wird, daß diese zunächst die Transformationseinrichtung (TRE) kontaktiert und danach die Festlegung aktualisiert;
d) bei dem die mindestens zwei Rufnummern ein mit der Transformationseinrichtung (TRE) verbundenes Kommunikationsendgerät (KE) mit zwei verschiedenen Kommunikationsnetzen verbinden und bei dem die Aktualisierung der Festlegung in Abhängigkeit der Veränderung mindestens eines variablen Parameters eines jeweiligen Kommunikationsnetzes (N1,N10,N20,NN) erfolgt;
e) bei dem die Aktualisierung in Abhängigkeit mindestens eines vom Kommunikationsendgerät abhängenden Kriteriums erfolgt oder bei dem die Aktualisierung in Abhängigkeit mindestens eines teilnehmerspezifischen Kriteriums erfolgt;
f) bei dem die Mittel zur Fernaktualisierung ein der Aktualisierungsstelle und dem Kommunikationsendgerät gemeinsames Kommunikationsnetz (N1) aufweisen, über welches die Fernaktualisierung durchgeführt wird, und bei dem Mittel zur Zeitsteuerung der Fernaktualisierung vorhanden sind, wobei der Aktualisierungszeitpunkt von mal zu mal zwischen der Aktualisierungsstelle (AS) und der Transformationseinrichtung (TS) vereinbart werden kann.

5. System nach Anspruch 4, bei dem Mittel zur Deaktivierung des Rufsignals beim Kommunikationsendgerät vorhanden sind.

## Claims

1. Method for remote updating of a call number transformation designation in a transformation device for transforming at least one call number selected on the part of a communication subscriber into a call number defined by the designation, by means of an updating site (AS) having the follow features:
a) the transformation device (TRE) is first contacted by the updating site (AS);
b) the designation is updated;
c) the designation is changed in a time-controlled manner, with it being possible for the updating point in time to be agreed each time between the updating site (AS) and the transformation device (TS);
d) the access to different communication networks (N1, N10, N20, NN) is controlled by means of the designation, with
d1) the selecting behaviour of the communication subscriber being statistically analysed by the updating site (AS);
d2) the designation being carried out as a function of at least one communication network-specific criterion, which is stipulated to the updating site (AS) by the communication subscriber;
d3) the updating site (AS) monitoring the communication networks (N1, N10, N20, NN) in respect of the predetermined criterion and implementing a remote updating as a function of a change in this criterion.

2. Method according to one of the preceding claims, in which a terminal which is available at the communication subscriber's end is deactivated.

3. Method according to claim 1 or 2, in which the transformation device (TRE) and the updating site (AS) are connected by way of the same communication medium and in the event that the connection of the communication subscriber is busy at an agreed updating point in time, following a predefined span of time, which is known to both the updating site (AS) and also to the transformation device (TRE), a further updating attempt is started.

4. System for remote updating of a call number transformation designation for transforming at least one call number selected on the part of a communication subscriber into a call number defined by the designation,
a) which has at least one transformation device (TRE) with means for changeably designating at least two call number transformations;
b) which has an updating site (AS) with means for remotely updating at least one designation of at least one transformation device (TRE);
c) in which the remote updating is implemented by means of the updating site (AS) in the manner such that this firstly contacts the transformation device (TRE) and then updates the designation;
d) in which the at least two call numbers connect a communication terminal (KE) connected to the transformation device (TRE) to two different communication networks, and in which the updating of the designation is carried out as a function of the change in at least one variable parameter of a respective communication network (N1, N10, N20, NN);
e) in which the updating is carried out as a function of at least one criterion dependent on the communication terminal or in which the updating is carried out as a function of at least one subscriber-specific criterion;
f) in which the means for remote updating have a communication network (N1) which is common to the updating site (N1) and the communication terminal, by way of which the remote updating is implemented and in which means for time controlling the remote updating are available, with it being possible for the updating point in time to be agreed each time between the updating site (AS) and the transformation device (TS).

5. System according to claim 4, in which means exist for deactivating the call signal in the communication terminal.

## Revendications

1. Procédé pour actualiser à distance une désignation de transformation de numéros d'appel dans un dispositif de transformation pour la transformation d'au moins un numéro d'appel sélectionné par un correspondant en un numéro d'appel défini par la désignation par un service d'actualisation (AS) présentant les caractéristiques suivantes :
a) le dispositif de transformation (TRE) est d'abord mis en contact par le service d'actualisation (AS) ;
b) la désignation est modifiée de façon actuelle ;
c) la désignation est modifiée de façon programmée, le moment d'actualisation pouvant être convenu de temps à autre entre le service d'actualisation (AS) et le dispositif de transformation (TS) ;
d) l'accès aux différents réseaux de communication (N1, N10, N20, NN) est commandé par la désignation,
d1) le comportement en matière de numérotation du correspondant étant analysé au plan statistique par le service d'actualisation (AS) ;
d2) la désignation s'effectuant en fonction d'au moins un critère spécifique au réseau de communication, qui est prédéfini par le correspondant pour le service d'actualisation (AS) ;
d3) le service d'actualisation (AS) contrôlant les réseaux de communication (N1, N10, N20, NN) en ce qui concerne le critère prédéfini et effectuant une actualisation à distance en fonction d'une modification de ce critère.

2. Procédé selon l'une quelconque des revendications précédentes, dans lequel un terminal présent chez le correspondant est désactivé.

3. Procédé selon la revendication 1 ou 2, dans lequel le dispositif de transformation (TRE) et le service d'actualisation (AS) sont reliés au moyen du même milieu de communication et, dans le cas où le raccordement du correspondant est occupé à un moment d'actualisation convenu, un autre essai d'actualisation est démarré après un laps de temps prédéfini, qui est connu aussi bien du service d'actualisation (AS) que du dispositif de transformation (TRE).

4. Système pour actualiser à distance une désignation de transformation de numéros d'appel pour la transformation d'au moins un numéro d'appel sélectionné par un correspondant en un numéro d'appel défini par la désignation,
a) qui présente au moins un dispositif de transformation (TRE) avec des moyens pour la désignation modifiable d'au moins deux transformations de numéros d'appel,
b) qui présente un service d'actualisation (AS) avec des moyens pour actualiser à distance au moins une désignation d'au moins un dispositif de transformation (TRE),
c) sur lequel l'actualisation à distance est effectuée par le service d'actualisation (AS) en ce sens que celui-ci établit un contact avec le dispositif de transformation (TRE) et actualise ensuite la désignation ;
d) sur lequel les au moins deux numéros d'appel relient un terminal de communication (KE) relié au dispositif de transformation (TRE) avec deux réseaux de communication différents et sur lequel l'actualisation de la désignation s'effectue en fonction de la modification d'au moins un paramètre variable d'un réseau de communication respectif (N1, N10, N20, NN).
e) sur lequel l'actualisation s'effectue en fonction d'au moins un critère dépendant du terminal de communication ou sur lequel l'actualisation s'effectue en fonction d'au moins un critère spécifique à l'abonné ;
f) sur lequel les moyens pour l'actualisation à distance présentent un réseau de communication (N1) commun au service d'actualisation et au terminal de communication, par lequel l'actualisation à distance est effectuée, et dans le cas où des moyens pour la programmation de l'actualisation à distance sont présents, le moment d'actualisation pouvant être convenu de temps à autre entre le service d'actualisation (AS) et le dispositif de transformation (TS).

5. Système selon la revendication 4, sur lequel les moyens pour la désactivation du signal d'appel sur le terminal de communication sont présents.
